Europäisches Patentamt

European Patent Office

Office européen des brevets

(19)

(11) **EP 1 239 615 A1**

(12) **EUROPEAN PATENT APPLICATION**
published in accordance with Art. 158(3) EPC

(43) Date of publication:
**11.09.2002 Bulletin 2002/37**

(21) Application number: **01981046.4**

(22) Date of filing: **09.11.2001**

(51) Int Cl.⁷: **H04B 17/00**

(86) International application number:
**PCT/JP01/09817**

(87) International publication number:
**WO 02/039626 (16.05.2002 Gazette 2002/20)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **09.11.2000 JP 2000341648**

(71) Applicant: **MATSUSHITA ELECTRIC INDUSTRIAL CO., LTD.**
**Kadoma-shi, Osaka 571-8501 (JP)**

(72) Inventor: **IOCHI, Hitoshi**
**Yokosuka-shi, Kanagawa 239-0831 (JP)**

(74) Representative: **Grünecker, Kinkeldey, Stockmair & Schwanhäusser Anwaltssozietät**
**Maximilianstrasse 58**
**80538 München (DE)**

(54) **DESIRED WAVE/INTERFERENCE POWER RATIO MEASURING CIRCUIT AND DESIRED WAVE/INTERFERENCE POWER RATIO MEASURING METHOD**

(57)    A bias error in a low SIR area is corrected by subtracting a value of an interference signal power multiplied by a first correction coefficient which has been determined from an SIR characteristic diagram obtained in advance from a desired signal power to remove an interference signal component included in the desired signal power. Also, a bias error in a high SIR area is corrected by subtracting a value of a desired signal power multiplied by a second correction coefficient which has been determined from the SIR characteristic diagram obtained in advance from an interference signal power to remove a desired signal component included in the interference signal power.

FIG.5

## Description

Technical Field

The present invention relates to a signal to interference ratio measuring circuit and a signal to interference ratio measuring method.

Background Art

A conventional method for measuring a signal to interference ratio SIR is described in the Unexamined Japanese Patent Publication No. H11-237419. This SIR measuring method, at first, obtains a desiredsignal power and an interference signal power for every received signal which is before combination, and then calculates SIR after combination according to a combination method. This method is considered to make it possible to measure SIR with high accuracy through simple calculations.

However, a simulation conducted by the present inventor shows that SIR measured using the above-described conventional SIR measuring method contains bias errors caused by thermal noise, an interference signal component included in a desired signal power, a desired signal component included in an interference signal power, and the like. That is, it has been discovered that it is not possible to measure SIR with high accuracy using the above-described conventional SIR measuring method.

Furthermore, the magnitude of a bias error varies depending on the number of despread signals used for SIR measurement and the number of symbols included the despread signals, etc., and therefore there is a problem that the above-described conventional SIR measuring method whereby SIR is measured without taking into account those numbers will result in increasing of a measuring error according to the number of despread signals and the number of symbols, etc.

Disclosure of Invention

It is an object of the present invention to provide a signal to interference ratio measuring circuit and a signal to interference ratio measuring method, capable of correcting bias errors and improving the accuracy in measuring a signal to interference ratio.

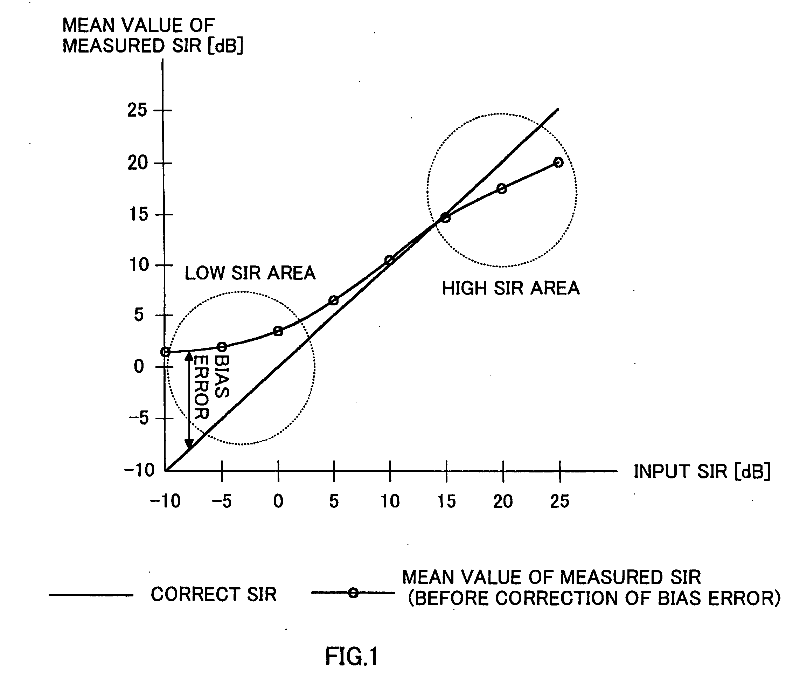

FIG.1 is a graph showing the result of a simulation on the mean value of SIR measured by the present inventor. That is, FIG.1 is a signal to interference ratio characteristic diagram showing the difference between a correct signal to interference ratio and an actually measured signal to interference ratio (that is, bias error). Upon calculating the mean value of the measured SIR, a mean value among several thousands of symbol sectional periods has been used.

An analysis on the simulation results conducted by the present inventor shows the followings:

(i) In a low SIR area where an SIR is relatively low, the mean value of the measured SIR is higher than the correct SIR due to influences of interference signal components included in the measured desired signal power.
(ii) In a high SIR area where an SIR is relatively high, the mean value of the measured SIR is lower than the correct SIR due to influences of desired signal components included in the measured interference signal power.
(iii) There is a fixed bias error specific to each SIR measuring circuit throughout the entire SIR area, depending on the method of measuring desired signal power and interference signal power.

Thus, the present inventor discovered that it was possible to correct bias errors shown in (i) to (iii) above by measuring an SIR according to the following expressions. In Expressions (1) to (4) below, 'SIR' denotes the mean value of measured SIR, 'S' denotes the mean value of the measured desired signal power, 'I' denotes the mean value of the measured interference signal power, 'a' denotes a correction coefficient of desired signal power, 'b' denotes a correction coefficient of interference signal power, and 'c' denotes a correction coefficient of a fixed bias error.

First, the present inventor discovered that it was possible to correct the bias error shown in (i) above by measuring the SIR according to Expression (1) below:

$$SIR = \frac{S - a \cdot I}{I} \qquad (1)$$

That is, in Expression (1) above, the interference signal component included in the desired signal power is removed by subtracting the value of mean value I of the interference signal power being multiplied by correction coefficient a from mean value S of the desired signal power.

Then, the present inventor found that it was possible to correct the bias error shown in (ii) above by measuring the SIR according to Expression (2) below:

$$SIR = \frac{S}{I - b \cdot S} \qquad (2)$$

That is, in Expression (2) above, the desired signal component included in the interference signal power is removed by subtracting the value of mean value S of the desired signal power being multiplied by correction coefficient b from mean value I of the interference signal power.

In addition, Expression (1) and Expression (2) above are applied to different areas, and therefore the two expressions can be united into Expression (3) below:

$$SIR = \frac{S - a \cdot I}{I - b \cdot S} \quad (3)$$

Then, the present inventor found that it was possible to correct the bias error shown in (iii) above by measuring the SIR according to Expression (4) below:

$$SIR = \frac{S - a \cdot I}{I - b \cdot S} \cdot c \quad (4)$$

That is, in Expression (4) above, a fixed bias error included in the entire area of the SIR is corrected by multiplying the SIR, of which the bias errors shown in (i) and (ii) above has been corrected, by correction coefficient c.

Here, when we consider the case where an SIR is measured in a CDMA (Code Division Multiple Access) mobile communication system, correction coefficient a and correction coefficient b will be determined according to the number of despread signals used in measurement of the SIR, the number of symbols included in the despread signals and the number of reception antennas. Furthermore, in the case where the number of despread signals used in measurement of the SIR and the number of symbols included in the despread signals vary with time, correction coefficient a and correction coefficient b will be adaptively changed according to those variations.

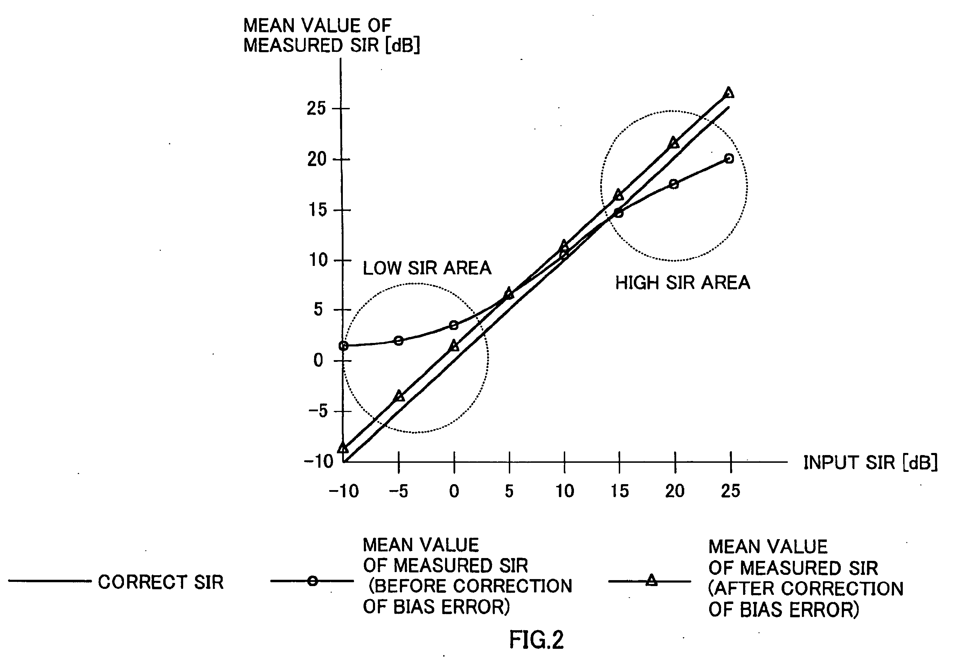

FIG.2 is a graph showing the result of a simulation on an SIR mean value measured according to Expression (4) above. This graph shows that measuring the SIR according to Expression (4) above makes it possible to correct a bias error in the entire area of the SIR and to measure a substantially correct SIR. In addition, the correction of the bias error in the low SIR area reflects the part corresponding to Expression (1) above in Expression (4) above. On the other hand, the correction of the bias error in the high SIR area reflects the part corresponding to Expression (2) above in Expression (4) above. Here, the simulation result shown in FIG.2 corresponds to the case where fixed bias error correction coefficient c = 1, and therefore when the fixed bias error correction coefficient c is set to an appropriate value, the mean value of the measured SIR can substantially coincide with the correct SIR in the entire area.

Brief Description of Drawings

FIG.1 is a graph showing the result of a simulation on the mean value of a measured SIR;
FIG.2 is a graph showing the result of a simulation on the mean value of an SIR measured according to Expression (4);
FIG.3 is a block diagram showing a configuration of a signal to interference ratio measuring circuit according to Embodiment 1 of the present invention;

FIG.4 is a block diagram showing a configuration of a signal to interference ratio measuring circuit according to Embodiment 2 of the present invention;
FIG.5 is a block diagram showing a configuration of a signal to interference ratio measuring circuit according to Embodiment 3 of the present invention;
FIG.6 is a block diagram showing another configuration of the signal to interference ratio measuring circuit according to Embodiment 3 of the present invention;
FIG.7 is a block diagram showing a configuration of a signal to interference ratio measuring circuit according to Embodiment 4 of the present invention;
FIG.8 is a block diagram showing a configuration of a signal to interference ratio measuring circuit according to Embodiment 5 of the present invention;
FIG.9 is a block diagram showing another configuration of the signal to interference ratio measuring circuit according to Embodiment 5 of the present invention;
FIG.10 is a block diagram showing a configuration of a signal to interference ratio measuring circuit according to Embodiment 6 of the present invention;
FIG.11 is a block diagram showing a configuration of a signal to interference ratio measuring circuit according to Embodiment 7 of the present invention; and
FIG.12 is a block diagram showing a configuration of a signal to interference ratio measuring circuit according to Embodiment 8 of the present invention.

Best Mode for Carrying out the Invention

With reference now to the attached drawings, embodiments of the present invention will be explained in detail below.

(Embodiment 1)

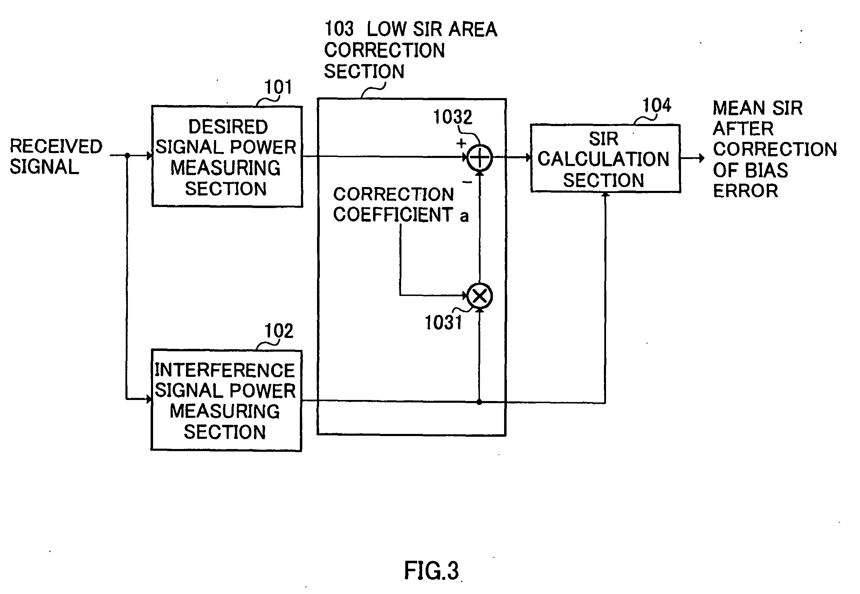

This embodiment will describe a case where a bias error in the low SIR area is corrected. FIG.3 is a block diagram showing a configuration of a signal to interference ratio measuring circuit according to Embodiment 1 of the present invention.

In the signal to interference ratio measuring circuit shown in FIG.3, desired signal power measuring section 101 measures the power of a desired signal component of a received signal and calculates a mean value in a predetermined sectional period of the desired signal power. Interference signal power measuring section 102 measures the power of an interference signal component of the received signal and calculates a mean value in a predetermined sectional period of the interference signal power. Low SIR area correction section 103 is comprised of multiplier 1031 and adder 1032 and corrects a bias error in the low SIR area. SIR calculation section 104 calculates the ratio of the value obtained by low SIR area correction section 103 to the value calculated by interference signal power measuring section 102.

Then, an operation of the signal to interference ratio measuring circuit having the above-described configuration will be explained. First, desired signal power measuring section 101 calculates a mean value of the desired signal power in a predetermined sectional period and outputs to adder 1032. Also, interference signal power measuring section 102 calculates a mean value of the desired signal power in a predetermined sectional period and outputs to adder 1031 and SIR calculation section 104. Here, the mean value of the desired signal power output from desired signal power measuring section 101 corresponds to 'S' in Expression (1) above and the mean value of the interference signal power output from interference signal power measuring section 102 corresponds to 'I' in Expression (1) above.

The predetermined sectional period at the time of calculation of the mean value may be set according to the purpose of use of the SIR. For example, when the SIR is used for transmission power control, etc., in mobile communications, it will be set to a sectional period of several symbols to several tens of symbols, and when the SIR is used for channel status detection, etc., in mobile communications, it will be set to a sectional period of several hundreds of symbols to several thousands of symbols.

Multiplier 1031 multiplies the mean value of the interference signal power by correction coefficient a and outputs the resultant value to adder 1032. This correction coefficient a corresponds to 'a' in Expression (1) above. Adder 1032 subtracts the mean value of the interference signal power multiplied by correction coefficient a from the mean value of the desired signal power. That is, low SIR area correction section 103 performs a calculation corresponding to the numerator in Expression (1) above. By this way, the interference component included in the mean value of the desired signal power is removed. The mean value of the desired signal power after the removal of the interference signal component is output to SIR calculation section 104.

SIR calculation section 104 divides the mean value of the desired signal power, of which the interference signal component has been removed, by the mean value of the interference signal power. Thus, SIR calculation section 104 outputs the SIR measured according to Expression (1) above. This provides a mean SIR with the bias error in the low SIR area corrected.

Thus, according to the present embodiment, since the interference signal component included in the desired signal power is removed using the interference signal power multiplied by the correction coefficient, the bias error of the SIR in the low SIR area where the interference signal component becomes relatively larger than the desired signal component can be corrected.

(Embodiment 2)

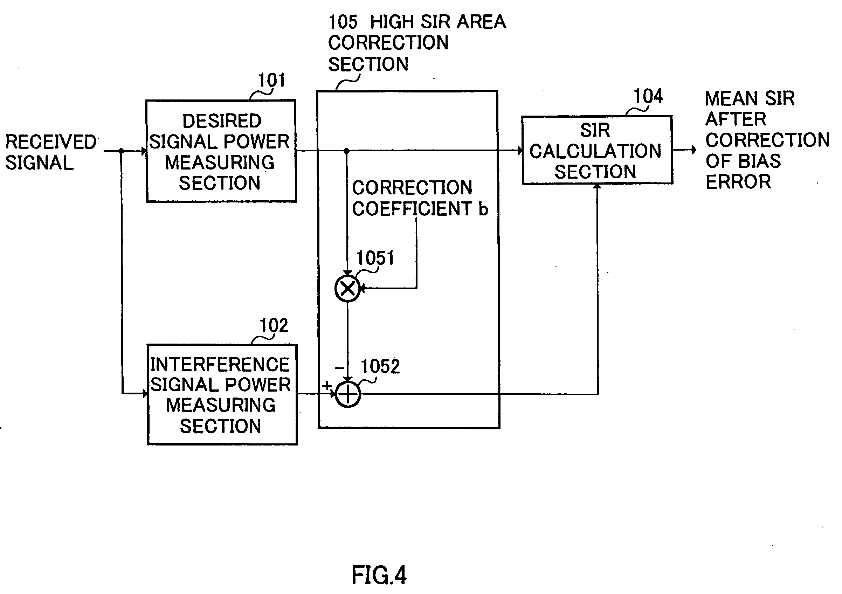

This embodiment will describe a case where a bias error in a high SIR area is corrected. FIG.4 is a block diagram showing a configuration of a signal to interference ratio measuring circuit according to Embodiment 2 of the present invention. However, the sections in FIG. 4 in common with those in FIG.3 will be given the same reference numerals as those in FIG.3 without further detailed explanations thereof.

In the signal to interference ratio measuring circuit shown in FIG.4, high SIR area correction section 105 is comprised of multiplier 1051 and adder 1052 and corrects the bias error in the high SIR area. SIR calculation section 104 calculates the ratio of the value calculated by desired signal power measuring section 101 to the value obtained by high SIR area correction section 105.

Then, an operation of the signal to interference ratio measuring circuit having the above-described configuration will be explained. First, desired signal power measuring section 101 calculates a mean value of the desired signal power in a predetermined sectional period and outputs the resultant value to multiplier 1051 and SIR calculation section 104. Also, interference signal power measuring section 102 calculates a mean value of the interference signal power in a predetermined sectional period and outputs the resultant value to adder 1052. Here, the mean value of the desired signal power output from desired signal power measuring section 101 corresponds to 'S' in Expression (2) above and the mean value of the interference signal power output from interference signal power measuring section 102 corresponds to 'I' in Expression (2) above.

Multiplier 1051 multiplies the mean value of the desired signal power by correction coefficient b and outputs the resultant value to adder 1052. This correction coefficient b corresponds to 'b' in Expression (2) above. Adder 1052 subtracts the mean value of the desired signal power multiplied by correction coefficient b from the mean value of the interference signal power. That is, high SIR area correction section 105 performs a calculation corresponding to the denominator in Expression (2) above. By this way, the desired signal component included in the mean value of the interference signal power is removed. The mean value of the interference signal power, of which the desired signal component has been removed, is output to SIR calculation section 104.

SIR calculation section 104 divides the mean value of the desired signal power by the mean value of the interference signal power of which the desired signal component has been removed. Thus, SIR calculation section 104 outputs the SIR measured according to Expression (2) above. This provides a mean SIR with the bias error in the high SIR area corrected.

Here, the bias error in the high SIR area is considered to be generated under the influence of a frequency offset between radio communication apparatuses and a Doppler effect as well as the influence of inter-code interference components generated by a filter, and therefore correction coefficient b may be adaptively changed according to the amount of the frequency offset and the magnitude of the Doppler frequency. Thus, by determining correction coefficient b according to the amount of the frequency offset and the magnitude of the Doppler frequency, it is possible to accurately correct the bias error of the high SIR area which varies in magnitude according to the amount of the frequency offset and the magnitude of the Doppler frequency.

Thus, according to the present embodiment, since the desired signal component included in the interference signal power can be removed using the desired signal power multiplied by the correction coefficient, the bias error of the SIR in the high SIR area, of which the desired signal component becomes relatively larger than the interference signal component, can be corrected.

(Embodiment 3)

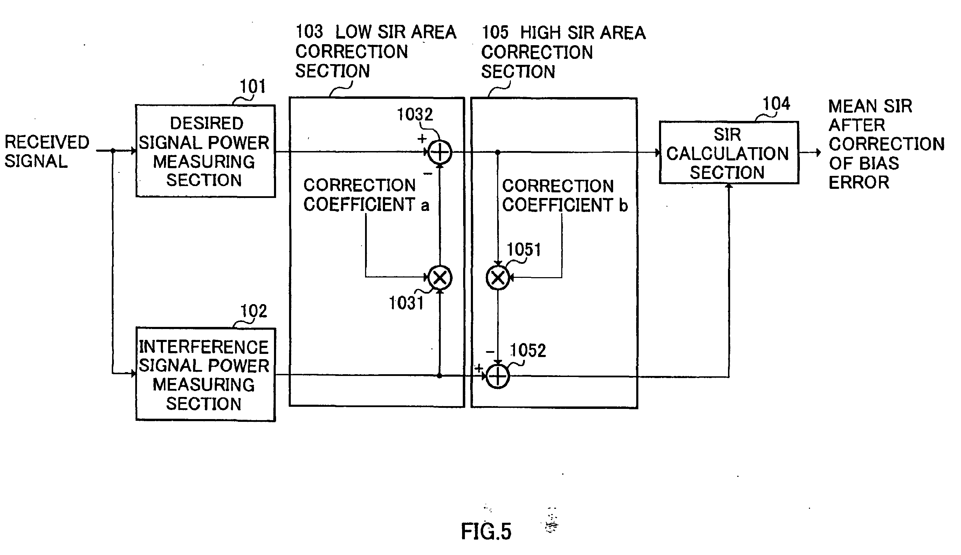

This embodiment will describe a case where both a bias error in a low SIR area and a bias error in a high SIR area are corrected, that is, a case where Embodiment 1 and Embodiment 2 above will be combined. FIG.5 is a block diagram showing a configuration of a signal to interference ratio measuring circuit according to Embodiment 3 of the present invention. However, the sections in FIG.5 in common with those in FIG.3 or FIG.4 will be given the same reference numerals as those in FIG.3 or FIG.4 without further detailed explanations thereof.

Low SIR area correction section 103 performs a calculation corresponding to the numerator of Expression（3）above. By this way, the interference signal component included in the mean value of the desired signal power is removed. The mean value of the desired signal power, of which the interference signal component has been removed, is output to SIR calculation section 104 and multiplier 1051 of high SIR area correction section 105.

High SIR area correction section 105 performs a calculation corresponding to the denominator of Expression (3) above. By this way, the desired signal component included in the mean value of the interference signal power is removed. Here, the desired signal component to be removed by high SIR area correction section 105 is the desired signal component of which the interference signal component has been already removed by low SIR area correction section 103, and therefore high SIR area correction section 105 can correct a bias error of the high SIR area with higher accuracy than Embodiment 2 above. The mean value of the interference signal power, of which the desired signal component has been removed, is output to SIR calculation section 104.

SIR calculation section 104 divides the mean value of the desired signal power, of which the interference signal component has been removed, by the mean value of the interference signal power of which the desired signal component has been removed. Thus, SIR calculation section 104 outputs the SIR measured according to Expression (3) above. By this way, a mean SIR, of which both the bias error in the low SIR area and bias error in the high SIR area has been corrected, can be obtained.

In addition, the configuration as mentioned above is designed to correct the bias error in the low SIR area first and then correct the bias error in the high SIR area, but the configuration may be as described below so as to correct the bias error in the high SIR area first and then correct the bias error in the low SIR area.

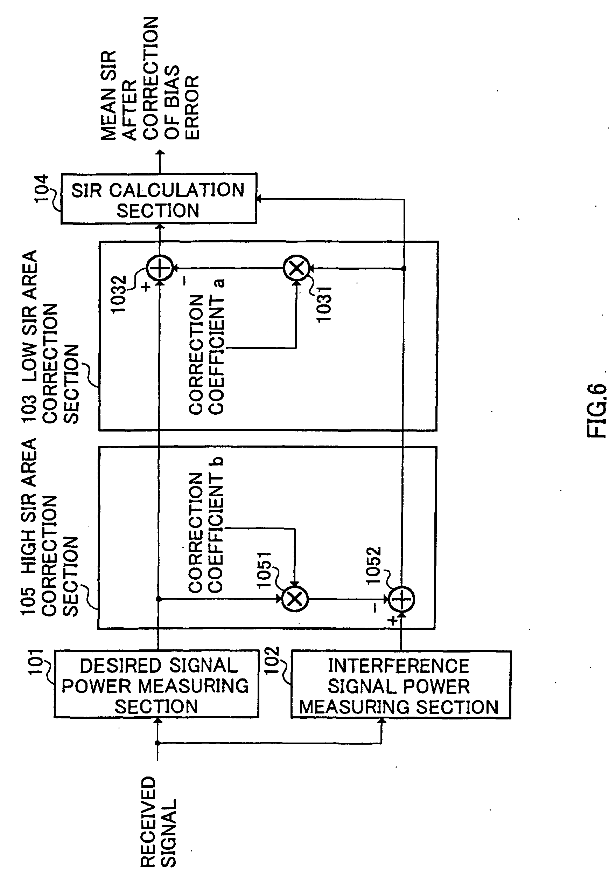

FIG.6 is a block diagram showing another configuration of a signal to interference ratio measuring circuit according to Embodiment 3 of the present invention. However, the sections in FIG.6 in common with those in FIG.5 will be given the same reference numerals as those in FIG.5 without further detailed explanations thereof.

High SIR area correction section 105 performs a calculation corresponding to the denominator of Expression (3) above. By this way, the desired signal component included in the mean value of the interference signal power is removed. The mean value of the interference signal power after the removal of the desired signal component is output to SIR calculation section 104 and multiplier 1031 of low SIR calculation section 103.

Low SIR area correction section 103 performs a calculation corresponding to the numerator of Expression (3) above. By this way, the interference signal component included in the mean value of the desired signal power is removed. Here, the interference signal component to be removed by the low SIR area correction section 103 is the interference signal component of which the desired signal component has been already removed by high SIR area correction section 105, and therefore low SIR area correction section 103 can correct the bias error of the low SIR area with higher accuracy than Embodiment 1 above. The mean value of the desired signal power, of which the interference signal component has been removed, is output to SIR calculation section 104.

SIR calculation section 104 divides the mean value of the desired signal power, of which the interference signal component has been removed, by the mean value of interference signal power of which the desired signal component has been removed. Thus, SIR calculation section 104 outputs the SIR measured according to Expression (3) above. By this way, a mean SIR of which both the bias error in the low SIR area and bias error in the high SIR area have been corrected, can be obtained.

Thus, according to the present embodiment, both the bias error in the low SIR area and bias error in the high SIR area can be corrected. This embodiment can also correct bias errors with higher accuracy than Embodiment 1 and Embodiment 2 above.

(Embodiment 4)

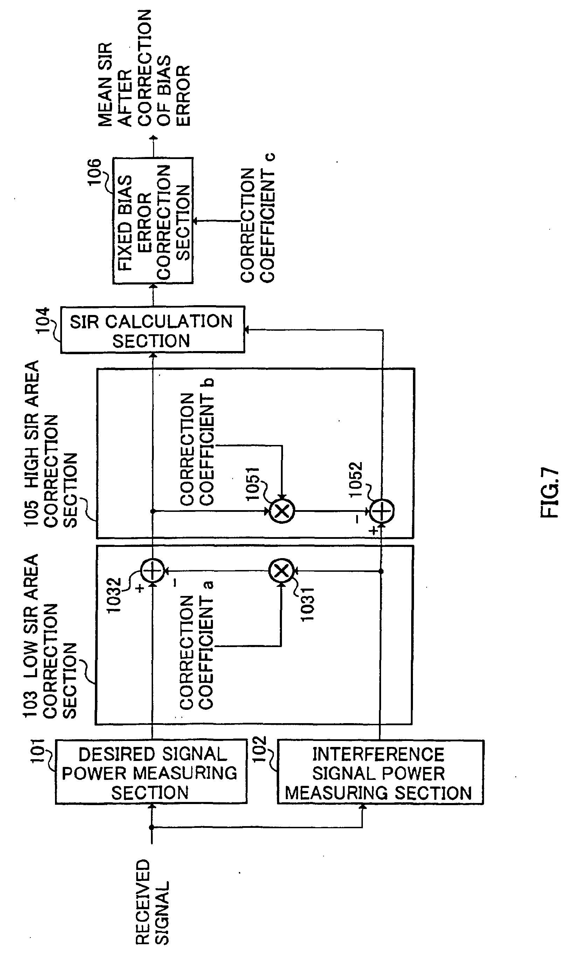

This embodiment will describe a case where a fixed bias error specific to its own circuit that exists in the entire area of an SIR is corrected. FIG.7 is a block diagram showing a configuration of a signal to interference ratio measuring circuit according to Embodiment 4 of the present invention. However, the sections in FIG. 7 in common with those in FIG.5 will be given the same reference numerals as those in FIG.5 without further detailed explanations thereof.

SIR calculation section 104 outputs an SIR measured according to Expression (3) above. That is, SIR calculation section 104 outputs a mean SIR of which both the bias error in the low SIR area and the bias error in the high SIR area have been corrected.

Fixed bias error correction section 106 multiplies the mean SIR output from SIR calculation section 104 by correction coefficient c for correcting the fixed bias error that exists in the entire area of the SIR. Thus, fixed bias error correction section 106 outputs the SIR measured according to Expression (4) above. By this way, a mean SIR, of which the bias error in the low SIR area, the bias error in the high SIR area and the fixed bias error that exists in the entire area of the SIR have been corrected, can be obtained.

Thus, according to the present embodiment, a fixed bias error specific to its own circuit that exists in the entire area of an SIR can be corrected.

(Embodiment 5)

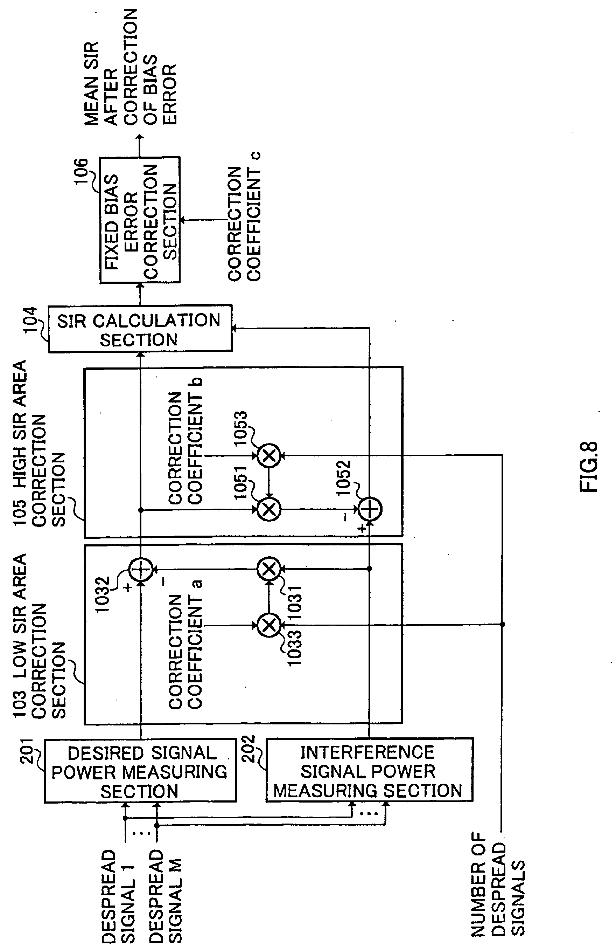

When we consider the case where an SIR is measured in a CDMA mobile communication system, the magnitude of a bias error in the low SIR area and the magnitude of a bias error in the high SIR area vary according to the number of despread signals used for SIR measurement, the number of symbols included in the despread signals, and the number of reception antennas, etc. Thus, this embodiment will first describe a case where correction coefficient a and correction coefficient b are determined according to the number of despread signals. FIG.8 is a block diagram showing a configuration of a signal to interference ratio measuring circuit according to Embodiment 5 of the present invention. However, the sections in FIG.8 in common with those in FIG.7 will be given the same reference numerals as those in FIG.7 without further detailed explanations thereof.

In the signal to interference ratio measuring circuit shown in FIG.8, desired signal power measuring section 201 measures the powers of the desired signal components of despread signals 1 through M and calculates the mean value of the desired signal powers in a predetermined sectional period. The calculated mean value of the desired signal powers are output to adder 1032. A method of calculating the mean value of the desired signal powers may be a method where the mean values of the desired signal powers for the respective despread signals in a predetermined sectional period are calculated and then all these mean values are added up, a method where all desired signal powers measured for the respective despread signals in a predetermined sectional period are added up and then the desired signal powers are averaged, etc.

Interference signal power measuring section 202 measures the powers of the interference signal components of despread signals 1 through M and calculates the mean value of the interference signal powers in a predetermined sectional period. The calculated mean value of the interference signal powers is output to multiplier 1031 and adder 1052. As a method for calculating the mean value of the interference signal powers, a method, which is similar to the above-described method for calculating the mean value of the desired signal powers, can be adopted.

Multiplier 1033 of low SIR area correction section 103 multiplies correction coefficient a by the number of despread signals used for measurement of the SIR. Correction coefficient a multiplied by the number of despread signals is output to multiplier 1031. That is, low SIR area correction section 103 performs a calculation corresponding to the numerator in Expression (3) above using correction coefficient a multiplied by the number of despread signals. By this way, as many the interference signal components included in the mean values of the desired signal powers as the despread signals are removed.

Also, multiplier 1053 of high SIR area correction section 105 multiplies correction coefficient b by the number of despread signals used for measurement of the SIR. Correction coefficient b multiplied by the number of despread signals is output to multiplier 1051. That is, high SIR area correction section 105 performs a calculation corresponding to the denominator in Expression (3) above using correction coefficient b multiplied by the number of despread signals. By this way, as many the desired signal components included in the mean values of the interference signal powers as the despread signals are removed.

In addition, the number of despread signals to be multiplied on correction coefficient a and correction coefficient b is a fixed value when the number of despread signals used for measurement of the SIR is predetermined, while the number is changed, when the number of despread signals used for measurement of the SIR varies with time, according to the variation.

Furthermore, when the number of despread signals used for measurement of the SIR varies with time, it is also possible to use an averaged number in a predetermined sectional period. Averaging of the number of despread signals in this way prevents a drastic change of correction coefficient a and correction coefficient b even if a drastic change occurs in the number of received despread signals temporarily, preventing the SIR from drastically changing due to a temporary change of the number of despread signals.

Thus, according to the present embodiment, since correction coefficient a and correction coefficient b are determined according to the number of despread signals used for measurement of the SIR, it is possible to accurately correct a bias error that changes in magnitude according to the number of despread signals.

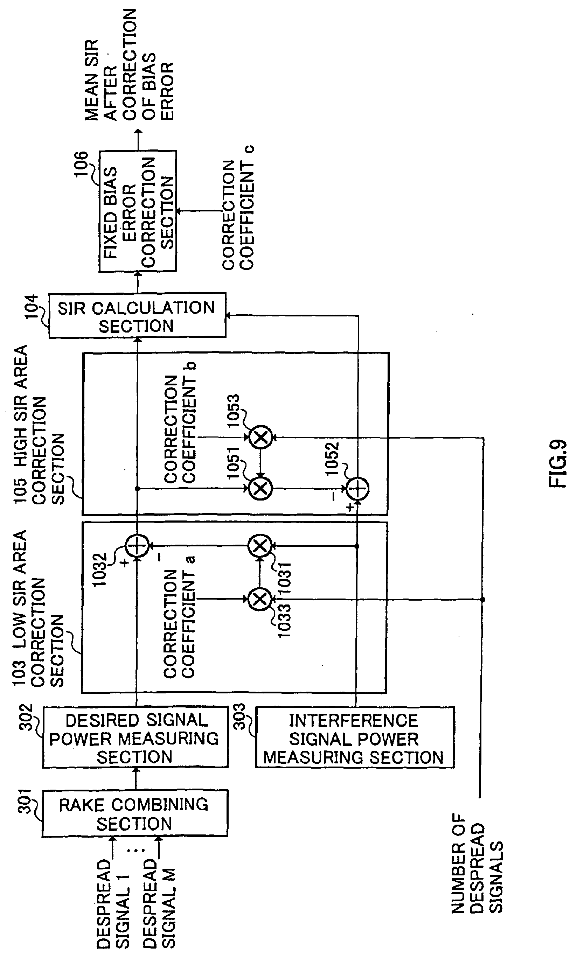

This embodiment can also measure the SIR using a RAKE-combined signal by adopting a configuration shown in FIG.9. FIG.9 is a block diagram showing another configuration of the signal to interference ratio measuring circuit according to Embodiment 5 of the present invention. However, the sections in FIG. 9 in common with those in FIG.8 will be given the same reference numerals as those in FIG.8 without further detailed explanations thereof.

In the signal to interference ratio measuring circuit shown in FIG.9, RAKE combination section 301 RAKE-combines despread signals 1 through M and outputs the result to desired signal power measuring section 302 and interference signal power measuring section 303. Desired signal power measuring section 302 measures the power of the RAKE-combined desired signal component and calculates the mean value of the desired signal powers in a predetermined sectional period. Interference signal power measuring section 303 measures the power of the RAKE-combined interference signal component and calculates the mean value of the interference signal powers in a predetermined sectional period.

By adopting the configuration shown in FIG.9 for the signal to interference ratio measuring circuit according to this embodiment, it is possible to accurately correct a bias error which changes in magnitude according to the number of despread signals also in the case an SIR is measured using RAKE-combined signals.

(Embodiment 6)

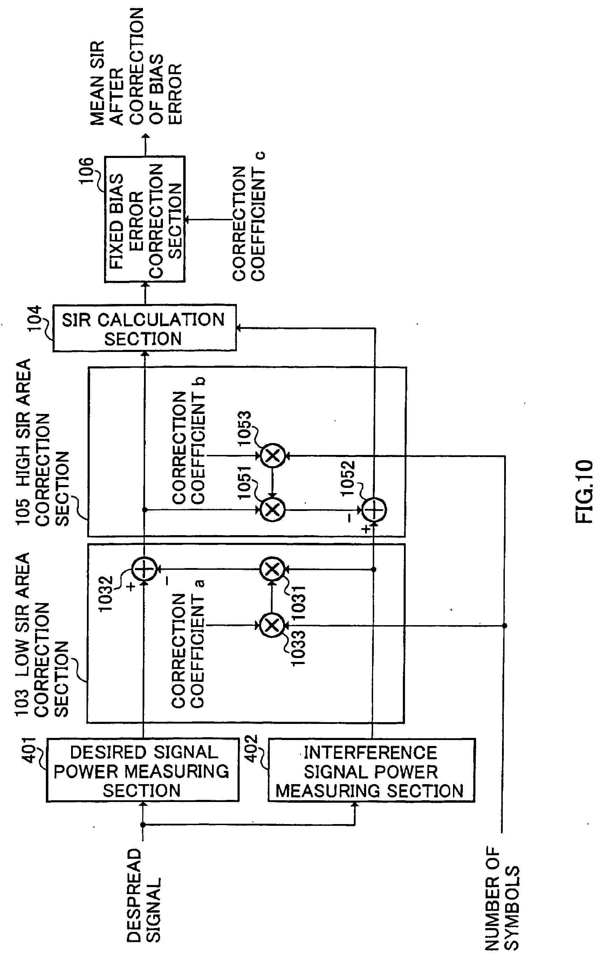

This embodiment will describe a case where correction coefficient a and correction coefficient b are determined according to the number of symbols used for measurement of an SIR. FIG.10 is a block diagram showing a configuration of a signal to interference ratio measuring circuit according to Embodiment 6 of the present invention. However, the sections in FIG.10 in common with those in FIG.8 will be given the same reference numerals as those in FIG.8 without further detailed explanations thereof.

In the signal to interference ratio measuring circuit shown in FIG.10, desired signal power measuring section 401 measures the power of the desired signal component of a despread signal for each symbol and calculates the mean value of the desired signal powers in a predetermined sectional time. The calculated mean value of the desired signal powers is output to adder 1032. A method for calculating the mean value of the desired signal powers may be a method where the respective mean values for a plurality of slots regarding symbols at the same location of the respective slots are calculated first and then all those mean values are added up, a method where all desired signal powers measured for the respective symbols at the same location of the respective slots for a plurality of slots are added up first and then the desired signal powers are averaged, etc.

Interference signal power measuring section 402 measures the power of the interference signal component of a despread signal for each symbol and calculates the mean value of the interference signal powers in a predetermined sectional period. The calculated mean value of the interference signal powers is output to multiplier 1031 and adder 1052. As a method for calculating the mean value of the interference signal powers, a method, which is similar to the above-described method for calculating the mean value of the desired signal powers, can be adopted.

Multiplier 1033 of low SIR area correction section 103 multiplies correction coefficient a by the number of symbols used for measurement of the SIR. Correction coefficient a multiplied by the number of symbols is output to multiplier 1031. That is, low SIR area correction section 103 performs a calculation corresponding to the numerator in Expression (3) above using correction coefficient a multiplied by the number of symbols. By this way, as many the interference signal components included in the mean value of the desired signal powers as symbols are removed.

Also, multiplier 1053 of high SIR area correction section 105 multiplies correction coefficient b by the number of symbols used for measurement of the SIR. Correction coefficient b multiplied by the number of symbols is output to multiplier 1051. That is, high SIR area correction section 105 performs a calculation corresponding to the denominator in Expression (3) above using correction coefficient b multiplied by the number of symbols. By this way, as many the desired signal components included in the mean value of the interference signal powers as symbols are removed.

In addition, the number of symbols to be multiplied on correction coefficient a and correction coefficient b is a fixed value when the number of symbols used for measurement of the SIR is predetermined, while the number is changed, when the number of symbols used for measurement of the SIR changes, according to the change.

Thus, according to the present embodiment, since correction coefficient a and correction coefficient b according to the number of symbols used for measurement of the SIR are determined, it is possible to accurately correct a bias error that changes in magnitude according to the number of symbols.

(Embodiment 7)

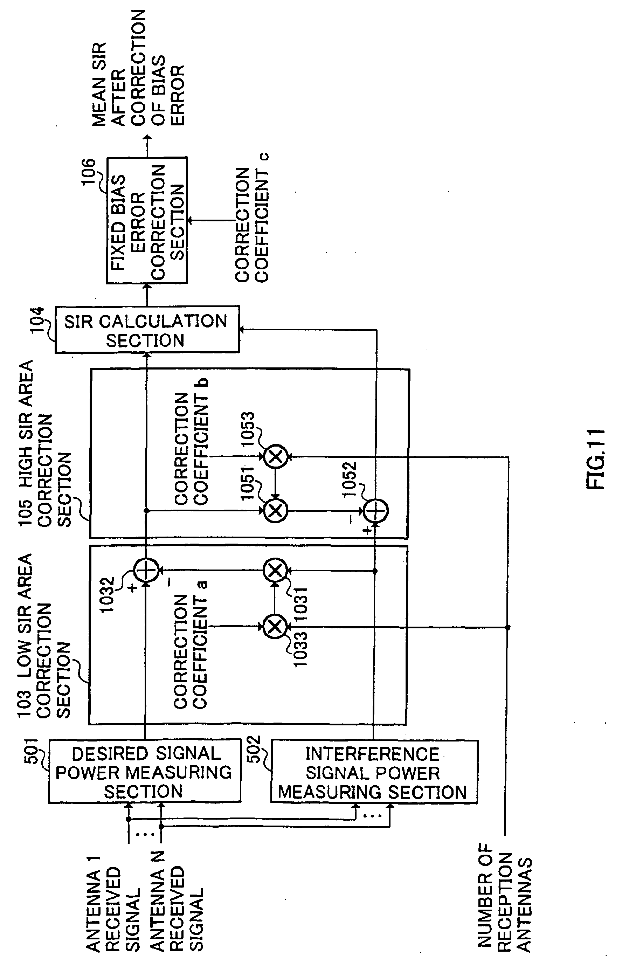

This embodiment will describe a case where correction coefficient a and correction coefficient b are determined according to the number of reception antennas. FIG.11 is a block diagram showing a configuration of a signal to interference ratio measuring circuit according to Embodiment 7 of the present invention. However, the sections in FIG.11 in common with those in FIG.8 will be given the same reference numerals as those in FIG.8 without further detailed explanations thereof.

In the signal to interference ratio measuring circuit shown in FIG.11, desired signal power measuring section 501 measures the powers of desired signal components of signals received by antennas 1 through N and calculates the mean value of the desired signal powers in a predetermined sectional period. The calculated mean value of the desired signal power are output to adder 1032. A method for calculating the mean value of the desired signal powers may be a method where the mean values of the desired signal powers for the respective antennas in a predetermined sectional period are calculated first and then all these mean values are added up, a method where all desired signal powers measured for the respective antennas in a predetermined sectional period are added up first and then the desired signal powers are averaged, etc.

Interference signal power measuring section 502 measures the powers of interference signal components of signals received by antennas 1 through N and calculates the mean value of the interference signal powers in a predetermined sectional period. The calculated mean value of the interference signal powers is output to multiplier 1031 and adder 1052. As a method for calculating the mean value of the interference signal powers, a method, which is similar to the above-described method for calculating the mean value of the desired signal powers, can be adopted.

Multiplier 1033 of low SIR area correction section 103 multiplies correction coefficient a by the number of reception antennas. Correction coefficient a multiplied by the number of reception antennas is output to multiplier 1031. That is, low SIR area correction section 103 performs a calculation corresponding to the numerator in Expression (3) above using correction coefficient a multiplied by the number of reception antennas. By this way, as many the interference signal components included in the mean value of the desired signal powers as reception antennas are removed.

Also, multiplier 1053 of high SIR area correction section 105 multiplies correction coefficient b by the number of reception antennas. Correction coefficient b multiplied by the number of reception antennas is output to multiplier 1051. That is, high SIR area correction section 105 performs a calculation corresponding to the denominator in Expression (3) above using correction coefficient b multiplied by the number of reception antennas. By this way, as many the desired signal components included in the mean value of the interference signal powers as reception antennas are removed.

Thus, according to the present embodiment, since correction coefficient a and correction coefficient b according to the number of reception antennas are determined, it is possible to accurately correct a bias error that changes in magnitude according to the number of reception antennas.

(Embodiment 8)

This embodiment will describe a case where a bias error with high accuracy is first calculated from an SIR which is before correction of a bias error averaged in a long sectional period (on the order of several hundreds of symbols to several thousands of symbols) and an SIR which is after correction of a bias error averaged in a long sectional period, and then the bias error of the SIR averaged in a short sectional period (on the order of several symbols to several tens of symbols) is corrected.

For an SIR used for transmission power control, etc. in mobile communications, a mean value in a short sectional period on the order of several symbols to several tens of symbols is normally used. However, since the distribution of the desired signal powers averaged in a short sectional period and the interference signal powers averaged in a short sectional period are large, the subtraction result of the numerator in Expression (1) above and the subtraction result of the denominator in Expression (2) above may become negative. For this reason, a mean SIR value after correction of bias errors according to the bias error correction methods in Embodiments 1 to 7 above may become a negative value, preventing calculation of the SIR. Thus, in the present embodiment, a bias error with high accuracy is calculated from an SIR having a small distribution averaged in a long sectional period on the order of several hundreds of symbols to several thousands of symbols to correct a bias error of an SIR averaged in a short sectional period on the order of several symbols to several tens of symbols using the above-described bias error.

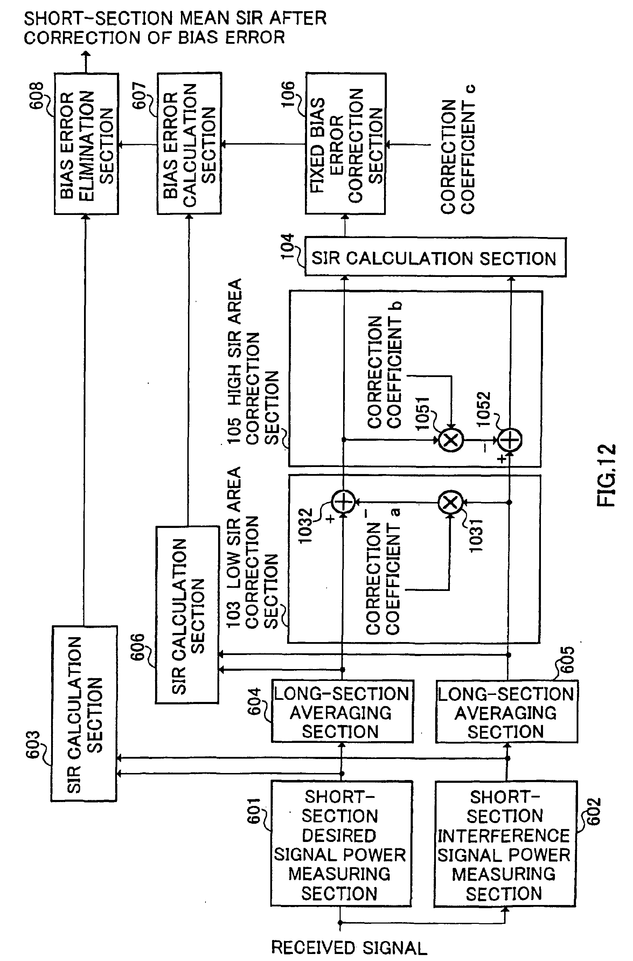

FIG.12 is a block diagram showing a configuration of a signal to interference ratio measuring circuit according to Embodiment 8 of the present invention. However, the sections in FIG.12 in common with those in FIG.7 will be given the same reference numerals as those in FIG.7 without further detailed explanations thereof.

In the signal to interference ratio measuring circuit shown in FIG.12, short-section desired signal power measuring section 601 measures the powers of a desired signal component of a received signal and calculates the mean value of the desired signal powers in a short sectional period (on the order of several symbols to several tens of symbols). The calculated mean value of the desired signal powers in the short sectional period is output to SIR calculation section 603 and long-section averaging section 604.

Short-section interference signal power measuring section 602 measures the powers of an interference signal component of the received signal and calculates the mean value of the interference signal powers in a short sectional period. The calculated mean value of the interference signal powers in the short sectional period is output to SIR calculation section 603 and long-section averaging section 605.

SIR calculation section 603 calculates the ratio of the value obtained from short-section desired signal power measuring section 601 to the value obtained from short-section interference signal power measuring section 602. A short-section mean SIR before bias error correction is calculated in this way. The short-section mean SIR before bias error correction is output to bias error elimination section 608.

Long-section averaging section 604 further averages the values obtained at short-section desired signal power measuring section 601 in a long sectional period (on the order of several hundreds of symbols to several thousands of symbols). The calculated mean value of the desired signal powers in a long sectional period is output to SIR calculation section 606 and adder 1032.

Long-section averaging section 605 further averages the values obtained at short-section interference signal power measuring section 602 in a long sectional period. The calculated mean value of interference signal powers in a long sectional period is output to SIR calculation section 606, multiplier 1031 and adder 1052.

SIR calculation section 606 calculates the ratio of the value obtained from long-section averaging section 604 to the value obtained from long-section averaging section 605. A long-section mean SIR before bias error correction is calculated in this way. The long-section mean SIR before bias error correction is output to bias error calculation section 607.

Low SIR area correction section 103 removes the interference signal component included in the mean value of the desired signal powers in a long sectional period. High SIR area correction section 105 removes the desired signal component included in the mean value of the interference signal powers in a long sectional period.

SIR calculation section 104 calculates a long-section mean SIR of which the bias error in the low SIR area and the bias error in the high SIR area have been corrected. Then, fixed bias error correction section 106 corrects a fixed bias error that exists in the entire SIR area. Thus, fixed bias error correction section 106 outputs a long-section mean SIR of which all bias errors have been corrected.

Bias error calculation section 607 calculates the difference between the long-section mean SIR after bias error correction output from fixed bias error correction section 106 and the long-section mean SIR before bias error correction output from SIR calculation section 606 and thereby calculates a bias error with high accuracy.

Bias error elimination section 608 corrects the bias error of the short-section mean SIR by subtracting the bias error calculated by bias error calculation section 607 from the short-section mean SIR before bias error correction.

In the above-described explanation, the case where a short sectional period consists of several symbols to several tens of symbols and a long sectional period consists of several hundreds of symbols to several thousands of symbols has been described as an example, but the present invention is not restricted to this example and is likewise applicable to cases where a short sectional period is shorter than a long sectional period.

Thus, according to the present embodiment, since a bias error with high accuracy is calculated from the SIR before bias error correction averaged in a long sectional period and the SIR after bias error correction averaged in a long sectional period, and the bias error of the SIR averaged in a short sectional period using the bias error, it is possible to improve the measuring accuracy of the SIR averaged in a short sectional period.

In addition, Embodiments 1 to 8 above can also be implemented by combining with one another.

It is possible to mount the signal to interference ratio measuring circuit according to Embodiment 1 to 8 above on a base station apparatus and a communication terminal apparatus that communicates with this base station apparatus used in a mobile communication system. When the circuit being mounted, it is possible to improve the accuracy of control (e.g., transmission power control) carried out by the base station apparatus or communication terminal apparatus according to a signal to interference ratio.

As described above, the present invention can correct bias errors and improve the accuracy of measuring a signal to interference ratio.

This application is based on the Japanese Patent Application No.2000-341648 filed on November 9, 2000, entire content of which is expressly incorporated by reference herein.

Industrial Applicability

The present invention is ideally applicable to a base station apparatus and a communication terminal apparatus that communicates with this base station apparatus used in a mobile communication system, in particular a CDMA mobile communication system.

**Claims**

1. A signal to interference ratio measuring circuit comprising:

    a first measuring device for measuring desired signal power of a received signal;

a second measuring device for measuring interference signal power of said received signal;
a signal to interference ratio calculator for calculating a signal to interference ratio; and
a correcting device for correcting a bias error included in said signal to interference ratio using a correction coefficient.

2. The signal to interference ratio measuring circuit according to claim 1, wherein the correction coefficient is determined from a signal to interference ratio characteristic diagram obtained in advance indicating a difference between a correct signal to interference ratio and an actually measured signal to interference ratio.

3. The signal to interference ratio measuring circuit according to claim 1, wherein the correcting device corrects a bias error in an area where a signal to interference ratio calculated by the signal to interference ratio calculator is higher than a correct signal to interference ratio by subtracting a value of the interference signal power measured by the second measuring device multiplied by a first correction coefficient which has been determined from the signal to interference ratio characteristic diagram obtained in advance from the desired signal power measured by the first measuring device to remove an interference signal component included in said desired signal power.

4. The signal to interference ratio measuring circuit according to claim 3, wherein the correcting device multiplies the interference signal power, of which a desired signal component has been removed, by the first correction coefficient.

5. The signal to interference ratio measuring circuit according to claim 3, wherein the first correction coefficient is determined according to the number of received signals used for measurement of a signal to interference ratio.

6. The signal to interference ratio measuring circuit according to claim 3, wherein the first correction coefficient is determined according to the number of symbols used for measurement of a signal to interference ratio.

7. The signal to interference ratio measuring circuit according to claim 3, wherein the first correction coefficient is determined according to the number of reception antennas.

8. The signal to interference ratio measuring circuit according to claim 1, wherein the correcting device corrects a bias error in an area where a signal to interference ratio calculated by the signal to interference ratio calculator is lower than a correct signal to interference ratio, by subtracting a value of the desired signal power measured by the first measuring device multiplied by a second correction coefficient which has been determined from the signal to interference ratio characteristic diagram obtained in advance from the interference signal power measured by the second measuring device to remove a desired signal component included in said interference signal power.

9. The signal to interference ratio measuring circuit according to claim 8, wherein the correcting device multiplies the desired signal power, of which an interference signal component has been removed, by the second correction coefficient.

10. The signal to interference ratio measuring circuit according to claim 8, wherein the second correction coefficient is determined according to the number of received signals used for measurement of a signal to interference ratio.

11. The signal to interference ratio measuring circuit according to claim 8, wherein the second correction coefficient is determined according to the number of symbols used for measurement of a signal to interference ratio.

12. The signal to interference ratio measuring circuit according to claim 8, wherein the second correction coefficient is determined according to the number of reception antennas.

13. The signal to interference ratio measuring circuit according to claim 8, wherein the second correction coefficient is determined according to the magnitude of a Doppler frequency.

14. The signal to interference ratio measuring circuit according to claim 8, wherein the second correction coefficient is determined according to the amount of frequency offset between radio communication apparatuses.

15. The signal to interference ratio measuring circuit according to claim 1, wherein the correcting device corrects a bias error specific to its own circuit by multiplying a signal to interference ratio calculated by the signal to interference ratio calculator by a third correction coefficient.

16. The signal to interference ratio measuring circuit according to claim 1, further comprising:

a third measuring device for measuring a first signal to interference ratio averaged in a first sectional period;

a fourth measuring device for measuring a second signal to interference ratio averaged in a second sectional period, which is shorter than said first sectional period;

a bias error calculator for calculating a bias error averaged in said first sectional period from said first signal to interference ratio and the first signal to interference ratio of which bias error has been corrected by the correcting device; and

an eliminator for eliminating a bias error included in said second signal to interference ratio using the bias error averaged in said first sectional period.

17. A base station apparatus provided with a signal to interference ratio measuring circuit, said signal to interference ratio measuring circuit comprising:

a first measuring device for measuring desired signal power of a received signal;

a second measuring device for measuring interference signal power of said received signal;

a signal to interference ratio calculator for calculating a signal to interference ratio; and

a correcting device for correcting a bias error included in said signal to interference ratio using a correction coefficient.

18. A communication terminal apparatus provided with a signal to interference ratio measuring circuit, said signal to interference ratio measuring circuit comprising:

a first measuring device for measuring desired signal power of a received signal;

a second measuring device for measuring interference signal power of said received signal;

a signal to interference ratio calculator for calculating a signal to interference ratio; and

a correcting device for correcting a bias error included in said signal to interference ratio using a correction coefficient.

19. A method of measuring a signal to interference ratio comprising:

a first measuring step of measuring desired signal power of a received signal;

a second measuring step of measuring interference signal power of said received signal;

a calculating step of calculating a signal to interference ratio; and

a correcting step of correcting a bias error included in said signal to interference ratio using a correction coefficient.

20. The method of measuring a signal to interference ratio according to claim 19, wherein the correction coefficient is determined from a signal to interference ratio characteristic diagram obtained in advance indicating a difference between a correct signal to interference ratio and an actually measured signal to interference ratio.

FIG.1

EP 1 239 615 A1

FIG.2

EP 1 239 615 A1

105 HIGH SIR AREA
CORRECTION
SECTION

101

RECEIVED
SIGNAL

DESIRED
SIGNAL POWER
MEASURING
SECTION

CORRECTION
COEFFICIENT b

1051

⊗

102

INTERFERENCE
SIGNAL POWER
MEASURING
SECTION

1052

−

+

⊕

104

SIR
CALCULATION
SECTION

MEAN SIR
AFTER
CORRECTION
OF BIAS
ERROR

FIG.4

FIG.5

RECEIVED
SIGNAL

101 DESIRED SIGNAL POWER MEASURING SECTION

102 INTERFERENCE SIGNAL POWER MEASURING SECTION

105 HIGH SIR AREA CORRECTION SECTION

CORRECTION COEFFICIENT b

1051

1052

103 LOW SIR AREA CORRECTION SECTION

CORRECTION COEFFICIENT a

1031

1032

104 SIR CALCULATION SECTION

MEAN SIR
AFTER
CORRECTION
OF BIAS
ERROR

FIG.6

FIG.7

FIG.8

EP 1 239 615 A1

FIG.9

FIG.10

EP 1 239 615 A1

FIG.11

SHORT-SECTION MEAN SIR AFTER
CORRECTION OF BIAS ERROR

FIG.12

RECEIVED SIGNAL

# EP 1 239 615 A1

| | INTERNATIONAL SEARCH REPORT | International application No. |
|---|---|---|
| | | PCT/JP01/09817 |

**A. CLASSIFICATION OF SUBJECT MATTER**
Int.Cl⁷  H04B17/00

According to International Patent Classification (IPC) or to both national classification and IPC

**B. FIELDS SEARCHED**

Minimum documentation searched (classification system followed by classification symbols)
Int.Cl⁷  H04B17/00

Documentation searched other than minimum documentation to the extent that such documents are included in the fields searched
Jitsuyo Shinan Koho      1922-1996    Toroku Jitsuyo Shinan Koho  1994-2002
Kokai Jitsuyo Shinan Koho 1971-2002    Jitsuyo Shinan Toroku Koho  1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 10-190497 A (Fujitsu, Limited),<br>21 July, 1998 (21.07.1998),<br>Fig. 15<br>& US 6028894 A      & KR 98063476 A | 1,17-19<br>2-16,20 |
| X<br>A | JP 2000-252926 A (Mitsubishi Electric Corporation),<br>14 September, 2000 (14.09.2000),<br>column 4, lines 31 to 47   (Family: none) | 1,17-19<br>2-16,20 |
| A | WO 99/46869 A1 (Telefonaktiebolaget LM Ericsson),<br>16 September, 1999 (16.09.1999),<br>Full text<br>& EP 1062742 A1 | 1-20 |
| A | JP 10-13364 A (NTT Ido Tsushinmo K.K.),<br>16 January, 1998 (16.01.1998),<br>Full text<br>& WO 97/39545 A1     & EP 0833472 A1<br>& CN 1193430 A       & US 6034952 A<br>& KR 99022806 A | 1-20 |

☐ Further documents are listed in the continuation of Box C.　☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>15 January, 2002 (15.01.02) | Date of mailing of the international search report<br>29 January, 2002 (29.01.02) |
|---|---|
| Name and mailing address of the ISA/<br>Japanese Patent Office | Authorized officer |
| Facsimile No. | Telephone No. |

Form PCT/ISA/210 (second sheet) (July 1992)

24